# EUROPÄISCHE PATENTSCHRIFT

(11) **EP 0 466 257 B1**
(45) Veröffentlichungstag und Bekanntmachung des Hinweises auf die Patenterteilung: **25.10.1995**
(21) Anmeldenummer: 91201711.8
(22) Anmeldetag: 03.07.1991
(51) Int. Cl.: G11B 15/675

(54) **Magnetbandkassettengerät**
Magnetic tape cassette apparatus
Appareil à cassette à bande magnétique

(30) Priorität: 13.07.1990 DE 4022356; 23.05.1991 DE 4116838
(43) Veröffentlichungstag der Anmeldung: 15.01.1992
(73) Patentinhaber: Philips Patentverwaltung GmbH, 22335 Hamburg (DE); Philips Electronics N.V., 5621 BA Eindhoven (NL)
(72) Erfinder: Kunze, Norbert, W-6332 Ehringshausen (DE); Weber, Georg, W-3552 Lohra (DE)
(74) Vertreter: von Laue, Hanns-Ulrich, Dipl.-Ing.

(56) Entgegenhaltungen:
- DE-A- 2 637 141
- DE-A- 2 942 027
- DE-A- 4 032 634
- FR-A- 2 360 958
- US-A- 4 476 506

## Beschreibung

Die Erfindung bezieht sich auf ein Magnetbandkassettengerät mit Wickeltellern für das Auf- und Abwickeln eines Magnetbandes und mit einem Lademachenismus mit Kassettenschacht, der eingerichtet ist zum Anheben der Magnetbandkassette in eine Auswerfstellung, in der das Einschieben und Auswerfen der Kassette erfolgt, und zum Absenken der Magnetbandkassette auf eine Kassettenauflage in eine Spielstellung, in der die Wickelkerne auf Wickeldorne aufgesetzt sind, wobei der Kassettenschacht aus einem im Schnitt U-förmigen Formteil mit zwei aufeinander zuweisenden Schenkelplatten und einer diese verbindenden Schachtseitenwand besteht und wobei der Kassettenschacht derart um eine Schwenkachse verschwenkbar ist, daß in der Auswerfstellung die eine Schenkelplatte und in der Spielstellung die andere Schenkelplatte in etwa parallel zur Kassettenauflage verlaufen.

Lademechanismen für Magnetbandkassetten sind in allen Magnetbandkassettengeräten vorhanden, in denen die Magnetbandkassette nicht von Hand unmittelbar in die Spielposition gesetzt werden kann. Ein derartiger Lademechanismus ist beispielsweise in der DE-C-37 17 587 (PHD 87-103) beschrieben. Der Kassettenschacht ist ein im Schnitt U-förmiges Formteil mit zwei flächigen Schenkelplatten, die mittels einer Schachtseitenwand verbunden sind. Der Kassettenschacht wird mittels eines Lifthebels auf und ab bewegt, der um eine Achse quer zur Einzieh- und Auswerfrichtung der Magnetbandkassette schwenkbar ist. Ein Kassettenmitnehmer ist in einem in Einzieh- und Auswerfrichtung verlaufenden Schlitz des Lifthebels geführt und wird von einem Betätigungshebel nach Maßgabe einer in Einschubrichtung verschiebbaren Auswerfstange in Einzieh- und Auswerfrichtung bewegt.

Der Mechanismus zum Heben und Senken des Kassettenschachtes erfordert seitliche Führungen, die chassisfest angeordnet sind. Darüber hinaus müssen das Heben und Senken bewirkende Stellglieder vorgesehen sein, die den Schacht horizontal geführt anheben und absenken. Dies erfordert einen ganz erheblichen mechanischen Bauteilaufwand.

Aus der DE-A-26 37 141 ist es bekannt, den im Schnitt U-förmigen Kassettenschacht um eine Achse zu schwenken, die sich parallel zur Längsrichtung der Schachtseitenwand erstreckt. Die Schenkelplatten sind von der Schachtseitenwand her aufeinander zu geneigt, und zwar derart, daß in der Auswerfstellung die obere Schenkelplatte und in der Spielstellung die untere Schenkelplatte in etwa parallel zur Kassettenauflage verlaufen.

In diesem Kassettenschacht ist die Kassette während des Ein- und Ausschiebens ungenügend geführt.

Es ist Aufgabe der Erfindung, einen Lademechanismus für ein Magnetbandkassettengerät zu schaffen, der aus wenigen Bauteilen besteht und zum Absenken und Anheben der Kassette ebenfalls auf einfache Weise steuerbar ist.

Die gestellte Aufgabe ist erfindungsgemäß dadurch gelöst, daß
- im Bereich der Schachtseitenwand ein Stützsattel vorgesehen ist, auf dem die Kassette in der Auswerfstellung aufliegt und aufliegend verschiebbar ist,
- der Stützsattel zum Absenken der Kassette in die Spielstellung von der Kassette weg bewegbar ist.

Beim Laden und Entladen des Laufwerkes ist die Kassette dadurch auf dem Stützsattel gut geführt. Auf diesem Stützsattel liegt die Kassette bei hochgeschwenktem Kassettenschacht mit ihrer Rückwand auf. Der Stützsattel bildet dabei eine Art Schiene, auf der die Rückwand der Kassette beim Laden und Auswerfen entlang gleitet.

In weiterer Ausgestaltung der Erfindung ist bei einer ersten Ausführungsform vorgesehen, daß der Stützsattel von einem in der Schachtseitenwand vorgesehenen Sattelfalz gebildet ist. Der Stützsattel ist dabei ein festes Teil des Kassettenschachtes.

Bei einer zweiten Ausführungsform sind zwei Ausführungsvarianten möglich. Bei einer ersten Variante ist vorgesehen, daß das Aktionsteil ein wegschwenkbarer Stützschenkel einer Haltefeder ist. Bei der zweiten Variante der zweiten Ausführungsform ist vorgesehen, daß das Aktionsteil von einem wegschwenkbaren Stützblock gebildet ist. Bei der zweiten Ausführungsform ist der Stützsattel damit ein gesondert zu handhabendes Teil.

Nach einer weiteren Ausgestaltung der Erfindung ist bei beiden Ausführungsformen vorgesehen, daß
- die Kassette unter Federwirkung im Schacht so gesteuert wird, daß sie in Spielstellung auf die Kassettenauflage gedrückt ist,
- die Kassette beim Anheben unter der Federwirkung ein Drehmoment erfährt, wodurch die Kassette in eine zur Spielstellung nicht parallele Stellung gelangt, bis sich der Schacht in der Auswerfstellung befindet.

Da die Kassette so immer unter dem Druck der Federwirkung steht, ergibt sich der Vorteil, daß der Lademechanismus nicht klappert.

Nach einer weiteren Ausgestaltung der Erfindung ist bei beiden Ausführungsformen vorgesehen, daß an einer der Schenkelplatten ein federndes Element angeordnet ist, welches in der Spielstellung der Kassette diese in Richtung auf das Chassis belastet und die Kassette zu Beginn des Anhebevorganges im Schacht in die Auswerfposition dreht, wobei in vorteilhafter Weiterbildung der Erfindung das federnde Element eine an der oberen Schenkelplatte angeordnete Blattfeder ist.

Die Feder wirkt damit in der Spielstellung als Andruckfeder, die die Kassette in der Spielstellung mit einer definierten Andruckkraft gegen die Kassettenauflage drückt, um ein Klappern zu verhindern und eine gute Bandführung zu unterstützen. Beim Übergang von der Spielstellung in die Auswerfstellung schwenkt diese Feder die Kassettenrückwand hoch und legt die Kassette an die obere Schenkelplatte an.

Dazu ist nach einer weiteren Ausgestaltung der Erfindung vorgesehen, daß die untere Schenkelplatte, zu der die Kassette in der Spielstellung parallel liegt, der Kassette dann, wenn sie an ihr anliegt, einen Stützpunkt bietet, der so gewählt ist, daß die Kraft der von oben gegen die Kassettenvorderseite drückenden Blattfeder um den Stützpunkt ein Drehmoment auf die Kassette liefert, das die Kassette zum Stützsattel hin belastet. Die Kassette wird dadurch immer außerhalb der Spielstellung gegen die obere Schenkelplatte gedrängt.

In vorteilhafter Weiterbildung dieser Ausbildung ist vorgesehen, daß der Stützpunkt in der Spielstellung nicht an der Kassette anliegt. Damit kann die untere Schenkelplatte die Kassette in ihrer Spielposition nicht behindern.

Nach einer weiteren Ausgestaltung der ersten Ausführungsform der Erfindung ist vorgesehen, daß die Drehachse des Schachtes so angeordnet ist, daß sich der Sattelfalz beim Drehen des Kassettenschachtes von der Kassette entfernt und sie zum Absenken freigibt. Der Sattelfalz zieht sich damit beim Niederschwenken des Kassettenschachtes aus dem Absenkweg der Kassettenrückwand heraus, und die Kassettenrückwand kann in die Spielstellung fallen.

Nach einer weiteren Ausgestaltung der ersten Ausführungsform der Erfindung ist vorgesehen, daß die Rückführbewegung der Kassette auf den Sattelfalz mittels einer Rückstellfeder bewirkt wird, die gegen die Kassettenvorderseite wenigstens während der Schwenkbewegungen des Kassettenschachtes drückt, wobei die Rückstellfeder in vorteilhafter Weise am Chassis befestigt ist. Diese Bauweise ist einfach und bedarf keiner zusätzlichen Teile, da eine Führung ohnehin an der Kassettenvorderseite benötigt wird. Auch ist damit sichergestellt, daß die Kassette sicher in den Sattelfalz überführt und bei der Auswerfbewegung geführt ist.

Nach einer weiteren Ausgestaltung der Erfindung ist bei der ersten Variante der zweiten Ausführungsform vorgesehen, daß die Haltefeder des Aktionsteiles eine mit ihren Enden am Kassettenschacht senkrecht zu dessen Drehachse eingespannte Blattfeder ist, die von der Auswerfstange des Kassettengerätes von der Kassette derart weg bewegbar ist, daß der mit ihr verbundene Stützschenkel aus dem Absenkweg der Kassettenrückwand herausziehbar ist. Der Stützsattel ist damit wegziehbar gestaltet, um der Kassettenrückseite den Absenkweg zur Spielstellung freizugeben.

Nach einer weiteren Ausgestaltung dieser Variante der zweiten Ausführungsform der Erfindung ist vorgesehen, daß die Haltefeder einen Betätigungsarm aufweist, der zum Durchbiegen der Haltefeder von der Auswerfstange beaufschlagbar ist. Da die Auswerfstange dafür sorgt, daß der Stützsattel bzw. der Stützschenkel aus dem Absenkweg der Kassettenrückseite gezogen wird, erfolgt das Freigeben der Kassettenrückseite aus einer Überlagerung der Schwenkstellung des Kassettenschachtes und dem Wegbewegen des Stützsattels.

Nach einer weiteren Ausgestaltung der zweiten Variante der zweiten Ausführungsform der Erfindung ist vorgesehen, daß die Haltefeder mit einem Kassettenschenkel versehen ist, der bei in Spielstellung befindlicher Kassette gegen die Kassettenrückwand drückt. Damit wird die Positionierung der Kassette gegenüber dem Tonkopf weiter verbessert.

Nach einer weiteren Ausgestaltung der Erfindung ist vorgesehen, daß die Haltefeder, der Stützschenkel, der Kassettenschenkel und der Betätigungsarm ein einstückiges Formteil aus einem federungsfähigen Material sind.

Dabei ist in weiterer Ausgestaltung der Erfindung vorgesehen, daß die als Blattfeder ausgebildete Haltefeder an einem ihrer Enden drehbar eingespannt ist, während das andere Ende in einer Tasche des Kassettenschachtes gefangen ist. Dadurch kann sich die Feder weit durchbiegen, ohne ihre Führung zu verlieren.

Nach einer weiteren Ausgestaltung der Erfindung ist bei der zweiten Variante der zweiten Ausführungsform vorgesehen, daß der Stützblock um eine zur Drehachse des Schachtes parallele Achse schwenkbar und mittels einer Feder derart in Stützrichtung belastet ist, daß der Stützblock in der Auswerfstellung unterhalb der Magnetbandkassette den Stützsattel bildet, wobei der Stützblock mit einem Betätigungsarm versehen ist, über den er mittels der Auswerfstange zum Freigeben des Absenkweges des Kassettenschachtes aus deren Absenkweg heraus schwenkbar ist. Auch in diesem Fall ist der Stützsattel wegziehbar gestaltet, wobei die Freigabe des Absenkweges wieder aus einer Überlagerung der Schwenkstellung des Kassettenschachtes und dem Wegbewegen des Stützsattels besteht.

Nach einer weiteren Ausgestaltung dieser Variante ist vorgesehen, daß der Stützblock unter der Belastung der Feder in der Spielstellung gegen die Kassettenrückwand gedrückt ist. Damit sorgt der Stützblock, von dem über die Länge des Kassettenschachtes mehrere Unterstützungen vorgesehen sind, nicht nur für das Abstützen der Kassette bei Einschub- und Auswerfbewegungen, sondern in der Spielstellung auch der Positionierung der Kassette gegenüber dem Tonkopf.

Nach einer weiteren Ausgestaltung dieser Variante ist deshalb vorgesehen, daß der Stützblock aus Nasenteilen besteht, die unter die Kassette oder gegen die Kassettenrückwand fahren, und einem Träger dieser Nasenteile, der um die Stützblockdrehachse drehbar ist, wobei die Nasenteile, der Träger und der Betätigungsarm als einstückiges Kunststoffspritzteil ausgebildet sind. Der Stützblock ist damit ein einfach bildbares Kunststoffbauteil.

Nach einer weiteren Ausgestaltung beider Ausführungsformen der Erfindung ist vorgesehen, daß der Betätigungsarm mit einer schrägen Stellfläche der Auswerfstange zusammenwirkt, die in der Bewegungsrichtung der Auswerfstange wirksam ist. Dies führt zu günstigen Kraftübertragungsverhältnissen.

Nach einer weiteren Ausgestaltung der Erfindung ist dabei vorgesehen, daß die Auswerfstange zwei gegeneinander geneigte schräge Stellflächen aufweist, die zusammen eine Art Zahn bilden, über den der Betätigungsarm in beiden Bewegungsrichtungen der Auswerfstange hinweg läuft, wobei er den Stützblock gegen die Wirkung der Feder in den Zeiträumen, in denen der Absenkweg freigegeben sein muß, aus dem Absenkweg heraus schwenkt. Der Stützblock wird damit nur während der Schachtbewegungen von der Auswerfstellung in die Spielstellung und von der Spielstellung in die Auswerfstellung aus seinem Wirkbereich herausgezogen.

Nach einer weiteren Ausgestaltung der Erfindung, wobei das Laufwerk mit Fangstiften versehen ist, auf die die Kassette mit entsprechenden Durchbrüchen aufsetzt, ist vorgesehen, daß die in die Kassettendurchbrüche einfahrenden Fangstifte so gestaltet sind, daß sie die Kassette während der Absenkbewegung nach vorn ziehen in die korrekte Spielposition.

Die Erfindung wird anhand der Zeichnung näher erläutert. Es zeigen:
Fig. 1 bis 3 eine erste Ausführungsform eines Lademechanismus im Laufwerk eines Magnetbandkassettengerätes mit einem Kassettenschacht in mehreren Funktionsstellungen,
Fig. 4 bis 7 eine erste Variante einer zweiten Ausführungsform eines Lademechanismus im Laufwerk eines Magnetbandkassettengerätes mit einem Kassettenschacht in mehreren Funktionssstellungen,
Fig. 8 und 9 eine zweite Variante der zweiten Ausführungsform,
Fig. 10 das Zusammenwirken der Auswerfstange des Laufwerkes mit einem wegschwenkbaren Stützblock.

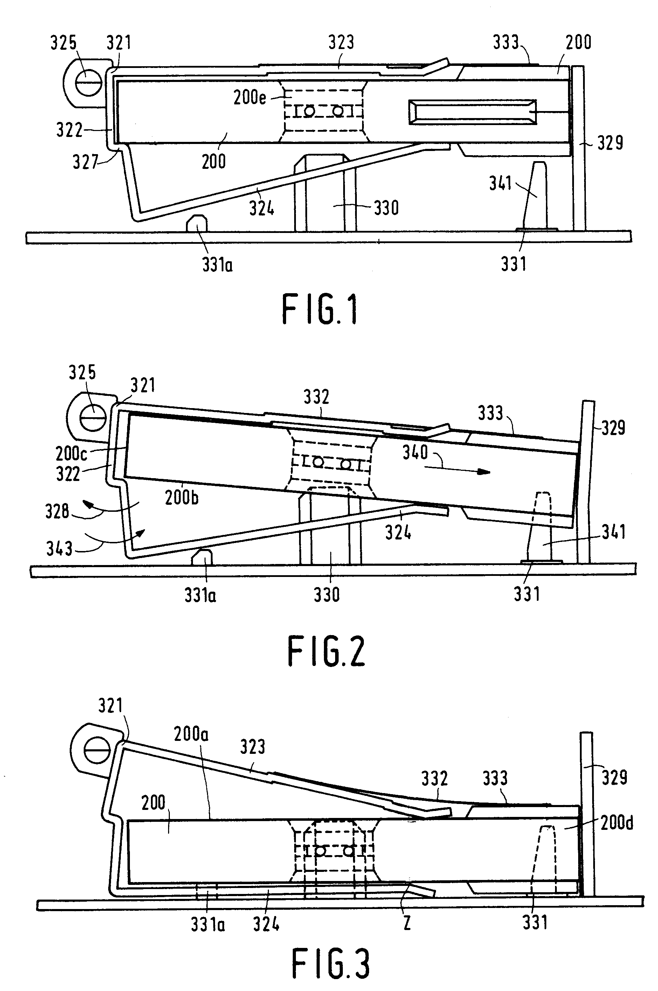

Fig. 1 bis 3 zeigen eine erste Ausführungsform eines Lademechanismus eines Magnetbandkassettengerätes, insbesondere eines Autoradios, mit einem Kassettenschacht. Zu dieser ersten Ausführungsform des Lademechanismus gehört ein Kassettenschacht 321, der als U-förmiges Blechformteil ausgebildet ist mit einer Schachtseitenwand 322 und zwei Schenkelplatten 323 und 324. Der Kassettenschacht 321 ist um eine Drehachse 325 drehbar gelagert, die in Richtung der Längserstreckung der Schachtseitenwand 322 verläuft. Die Schenkelplatten 323, 324 schließen einen Winkel kleiner als 90° miteinander ein. In der Lade- oder Auswerfstellung steht die obere Schenkelplatte 323 etwa horizontal. Eine Magnetbandkassette 200 kann damit horizontal in den Kassettenschacht 321 eingeschoben werden (Fig. 1). Die untere Schenkelplatte 324 ist in dieser Ladestellung nach oben geschwenkt. In der Spielstellung steht die obere Schenkelplatte 323 schräg nach unten, und die untere Schenkelplatte 324 verläuft in einer horizontalen Ebene. Die Rückseite 200c der Magnetbandkassette 200 liegt in einem eine Führungsschiene bildenden Sattelfalz 327 der Schachtseitenwand 322. Der Sattelfalz ist durch eine Kröpfung der Schachtseitenwand 322 gebildet. Beim Absenken des Kassettenschachtes 321 (Drehen um seine Drehachse 325) wird der Sattelfalz 327 in Richtung eines Pfeiles 328 zur Seite weggeschwenkt. Dabei wird die Kassette von Fangstiften 341 gefangen und gehalten bzw. durch deren Gestaltung bei der Abwärtsbewegung der Kassette auf ihnen noch zusätzlich vom Sattelfalz 327 in Richtung eines Pfeiles 340 weggezogen (Fig. 2).

Durch diese Relativbewegung verliert die Kassette 200 nach einem gewissen Absenken am Sattelfalz 327 ihre Unterstützung und klappt in die horizontale abgesenkte Spielstellung. Die Magnetbandkassette liegt dabei dann auf Kassettenauflagen 331, 331a auf (Fig. 3).

Das Verschwenken des Kassettenschachtes 321 erfolgt beim Bewegen einer nicht dargestellten Auswerfstange über eine ebenfalls nicht dargestellte Kulissenführung.

An der oberen Schenkelplatte 323 ist eine Blattfeder 332 befestigt. Das freie Ende 333 der Blattfeder 332 drückt gegen die in den Schacht 321 eingeschobene Kassette 200. In der in Fig. 3 dargestellten Spielstellung hebt sich die Blattfeder 332 aus der Lage nach Fig. 1 bzw. 2 ab und drückt dabei auf die Vorderseite 200d der Kassette 200. Dabei wird die Kassette 200 in Spielstellung sicher niedergehalten.

Am Chassis 3, an dem die Kassettenauflagen 331, 331a vorgesehen sind, ist eine Rückstellfeder 329 angeordnet, die die Kassette in Richtung auf den Sattelfalz 327 belastet. Beim Hochschwenken des Kassettenschachtes in Richtung eines Pfeiles 343 und damit dem Überführen der Kassette 200 aus der Spielstellung nach Fig. 3 in die Auswerfstellung nach Fig. 1 wird die Kassette 200 zunächst von der unteren Schenkelplatte 324 etwas angehoben, wobei sie unter der Kraft der Feder 332 um einen Punkt z (Fig. 3) an der unteren Schenkelplatte 324 im Uhrzeigersinn so weit verschwenkt wird, bis die obere Wand 200a der Kassette 200 sich an die obere Schenkelplatte 323 anlegt (Fig. 2). Der Schacht 321 verschwenkt dabei in Richtung des Pfeiles 343 nach Fig. 2 in die Stellung nach Fig. 1.

Sobald sich die Rückseite 200c der Kassette 200 mit der unteren Wand 200b in die Höhe des Sattelfalzes 327 bewegt hat und die Vorderseite die Fangstifte 341 verlassen hat, drückt eine Rückstellfeder 329 die Kassette 200 in den Sattelfalz 327 hinein. Damit hat die Kassette 200 wieder ihre Auswerfstellung erreicht (Fig. 1). Durch einen nicht dargestellten Mechanismus kann die Kassette 200 dann aus dem Schacht 321 herausgeschoben werden.

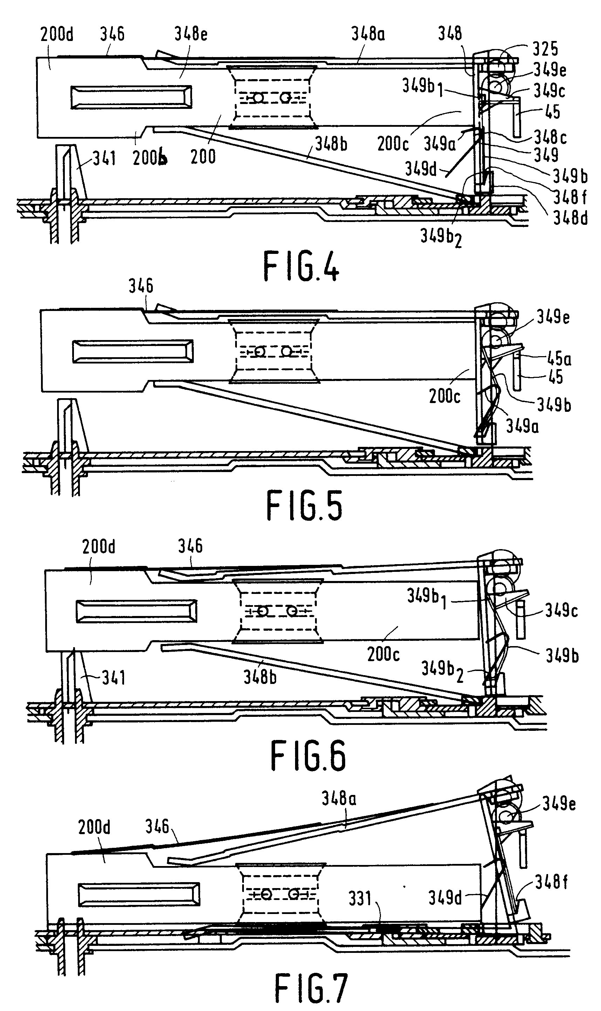

In den Fig. 4 bis 7 ist eine erste Variante einer zweiten Ausführungsform des Lademechanismus mit einem Kassettenschacht 348 dargestellt. Der Kassettenschacht besteht aus einem U-förmigen Blechformteil mit einer oberen Schenkelplatte 348a und einer unteren Schenkelplatte 348b, die über eine Schachtseitenwand 348c miteinander verbunden sind. Die Schenkelplatten 348a und 348b schließen von der Schachtseitenwand 348c her einen Winkel kleiner als 90° miteinander ein. In der Lade- oder Auswerfstellung nach Fig.4 fällt die obere Schenkelplatte 348a etwa in eine horizontale Ebene. In der Spielstellung nach Fig.7 fällt die untere Schenkelplatte 348b in eine horizontale Ebene. Der Kassettenschacht 348 ist zur Durchführung der Schwenkbewegung um die Drehachse 325 schwenkbar, die in Richtung der Längserstreckung der Schachtseitenwand 348c senkrecht zur Zeichenebene verläuft. Insoweit sind die Kassettenschacht-Konstruktionen der ersten und zweiten Ausführungsform einander entsprechend ausgebildet.

An der oberen Schenkelplatte 348a ist eine Liftfeder 346 vorgesehen, die sich von der Schachtseitenwand 348c zur seitlichen Schachtöffnung 348e und ein Stück darüber hinaus erstreckt. Ist eine Kassette 200, wie sich aus Fig. 4 ergibt, in den Kassettenschacht 348 eingeschoben, dann liegt die Liftfeder 346 an der Vorderseite 200d dieser Kassette 200 an. Eine nicht dargestellte Auswerf-Stangenfeder sorgt dafür, daß eine Auswerf-Stange in Ausfahrrichtung belastet ist.

Zu dem Lademechanismus und dem Kassettenschacht 348 gehört ein Mehrfunktionsfederteil 349. Dieses Mehrfunktionsfederteil 349 kann ein durchfederbares Kunststoffspritzteil oder ein Federblechformteil sein. Das Mehrfunktionsfederteil 349 weist eine Blattfeder 349b auf, die an ihren Enden 349b₁ und 349b₂ so eingespannt ist, daß sie sich zwischen ihren Enden deutlich durchbiegen kann, wie aus Fig. 5 und 6 zu ersehen ist. Hierzu ist das Blattfederende 349b₁ um einen Drehpunkt 349e drehbar gelagert. Das andere Blattfederende 349b₂ sitzt in einer Tasche 348f, die von der Schachtseitenwand 348c und einem Haken 348d gebildet wird. Das Mehrfunktionsfederteil 349 wird betätigt von der Auswerfstange 45 und einer an ihr vorgesehenen Auswerf-Stangenschräge 45a, auf die ein Betätigungsarm 349c des Mehrfunktionsfederteiles 349 auflaufen kann.

Fig. 4 zeigt den Lademechanismus in der Funktionsstellung, in der eine Kassette 200 gerade in den Kassettenschacht 348 eingeschoben ist. Die Kassettenrückwand 200c liegt dabei auf einem Stützschenkel 349a des Mehrfunktionsfederteiles 349 auf. Der Stützschenkel 349a bildet damit in dieser Stellung für die Kassettenrückseite 200c eine Auflage und Führungsschiene. Kopfseitig liegt die Magnetbandkassette 200 mit ihrer Unterseite 200b auf der Schenkelplatte 348b auf. Die Blattfeder 349b liegt unter Vorspannung im Uhrzeigersinn belastet an der Schachtseitenwand 348c an. Die Vorspannung der Blattfeder 349b wird dadurch erreicht, daß ihr unteres Ende 349b₂ in die Tasche hinter dem Haken 348d des Kassettenschachtes 348 geklemmt ist.

Fig. 5 zeigt eine Stellung des Kassettenschachtes kurz vor dem Absenken der Kassette 200 in die Spielstellung. Die Auswerfstange 45 fährt beim Ausfahren (in den Fig.4 bis 7 aus der Zeichenebene senkrecht heraus) mit ihrer Schräge 45a unter den Betätigungsarm 349c und biegt damit die Blattfeder 349b durch, wobei sich das obere Blattfederende 349b₁ entgegen dem Uhrzeigersinn um den Drehpunkt 349e dreht. Damit fährt der Stützschenkel 349a aus seiner Stützstellung aus dem Bewegungsraum oder dem Absenkweg der Kassette 200 heraus. Die Kassette schwenkt leicht im Uhrzeigersinn und drückt mit ihrem erhöhten Kopfteil im Bereich der Vorderseite 200d von unten gegen die nun vorgespannte Liftfeder 346. Dieser Zustand ist in Fig. 6 zu erkennen. Die Rückseite 200c der Kassette 200 senkt sich abwärts und die Vorderseite 200d drückt gegen die Liftfeder 346.

Während die Kassettenrückseite 200c weiter absinkt, schwenkt der Kassettenschacht 348 um die Achse 325 entgegen dem Uhrzeigersinn. Dies bedeutet, daß auch die Vorderseite 200d der Kassette 200 absinkt in die nun in Fig. 7 dargestellte Spielstellung, in der die Kassettenunterseite 200b auf dem Plattenschenkel 348b horizontal aufliegt. Die von der Schräge 45a vorgespannte Blattfeder 349 entspannt sich nun wieder, da der Kassettenschacht 348 entgegen dem Uhrzeigersinn verschwenkt. Nun drückt ein Kassettenschenkel 349d gegen die Kassettenrückwand und belastet die Kassette in Richtung auf die Fangstifte 341. Die Liftfeder 346 drückt von oben her gegen die Vorderseite 200d der Kassette 200 und hält diese an der Kassettenauflage 331 nieder. Die Kassette kann damit in abgesenkter Stellung in der Spielposition nicht klappern. Die obere Schenkelplatte 348a liegt schräg vor dem Kassettenfenster des Gerätes. Damit kann keine zweite Kassette eingeschoben werden. Die Liftfeder 346 und der Kassettenschenkel 349d geben der Kassette 200 in der abgesenkten Stellung eine definierte Position. Die Kassette liegt in der Spielstellung auf den in den Fig.1 bis 3 dargestellten Kassettenauflagen auf und steht mit der Schenkelplatte 348b während des Spielbetriebes nicht in Berührung.

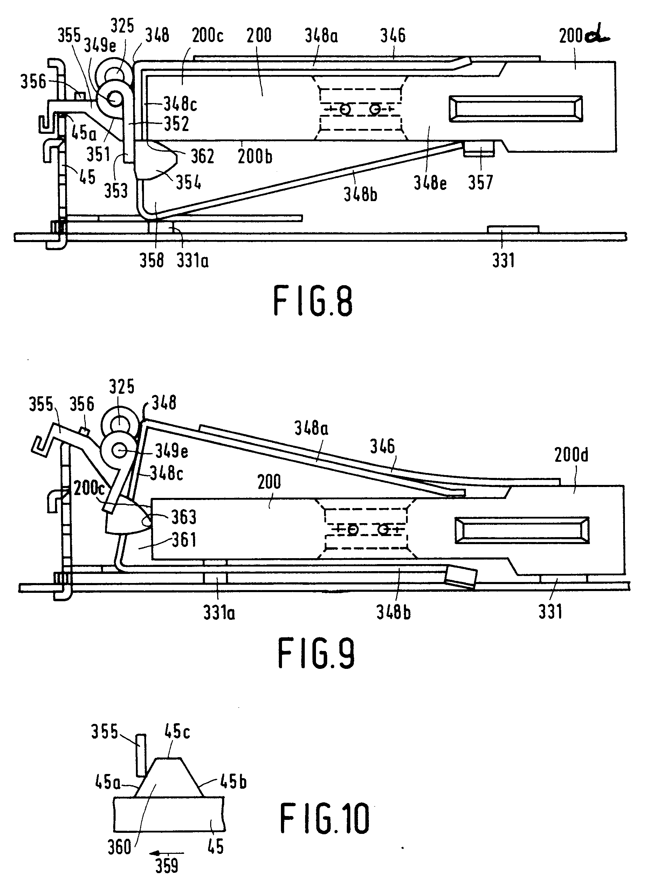

Bei der zweiten Variante der zweiten Ausführungsform, die in den Fig. 8 und 9 dargestellt ist, besteht der Kassettenschacht 348 ebenfalls aus einem U-förmigen Blechformteil mit einer oberen Schenkelplatte 348a und einer unteren Schenkelplatte 348b, die über eine Schachtseitenwand 348c miteinander verbunden sind. Die Schenkelplatten 348a und 348b schließen von der Schachtseitenwand 348 her einen Winkel < 90° miteinander ein. In der Lade- oder Auswerfstellung nach Fig. 8 fällt die obere Schenkelplatte 348a etwa in eine horizontale Ebene, während die untere Schenkelplatte von der Schachtseitenwand 348c her nach oben ansteigend verläuft. In der Spielstellung nach Fig. 9 verläuft die untere Schenkelplatte 348b etwa in eine horizontale Ebene, während die obere Schenkelplatte 348a von der Schachtseitenwand 348c her nach unten geneigt ist. Der Kassettenschacht 348 ist zur Durchführung von Schwenkbewegungen um die Drehachse 325 schwenkbar, die in Richtung der Längserstreckung der Schachtseitenwand 348c senkrecht zur Zeichenebene verläuft.

An der oberen Schenkelplatte 348a ist eine Liftfeder 346 vorgesehen, die sich parallel zur Schenkelplatte 348a von der Schachtseitenwand 348c her zur seitlichen Schachtöffnung 348e und ein Stück darüber hinaus erstreckt. Ist eine Kassette 200 in den Kassettenschacht 348 eingeschoben, dann liegt die Liftfeder 346 an der Vorderseite 200d dieser Kassette 200 an.

Eine nicht dargestellte Auswerfstangenfeder sorgt dafür, daß die Auswerfstange 45 in Ausfahrrichtung belastet ist.

Zum Lademechanismus der zweiten Variante der zweiten Ausführungsform gehört ein Stützblock 351. Dieser Stützblock 351 ist ein einstückiges Kunststoffspritzteil; es besteht aus einem Träger 352, der um die Drehachse 349e, die parallel zur Drehachse 325 verläuft, schwenkbar ist. Der Träger 352 verläuft senkrecht zur Zeichenebene über die gesamte Länge des Kassettenschachtes 348 hinweg und trägt an seinem freien Ende 353 Nasenteile 354. Diese Nasenteile 354 sind über die Länge des Trägers hinweg verteilt angeordnet. Zum Stützblock 351 gehört außerdem ein Betätigungsarm 355, gegen den eine Feder 356 drückt, die ihn in einer Drehrichtung entgegen dem Uhrzeigersinn belastet. Die Feder 356 ist der Einfachheit halber ein Blattfeder.

In der Stellung nach Fig. 8 befindet sich der Kassettenschacht 348 in der Lade- bzw. Auswerfposition. Die obere Schenkelplatte 348a verläuft in einer horizontalen Ebene. Die Nasenteile 354 unterstützen die Unterseite 200b der Kassette 200 am rückwärtigen Ende 200c. Dabei bilden die Nasenteile 354 eine Führungsschiene, die zusammen mit dem freien Ende 357 des unteren Kassettenschenkels 348b eine zweispurige Führungsbahn für die Magnetbandkassette 200 bilden, wenn sie senkrecht zur Zeichenebene ein- oder ausgeschoben wird.

Bei der Auswerfbewegung wird die Auswerfstange 45 senkrecht zur Zeichenebene in einer Richtung aus der Zeichenebene heraus bewegt, indem die Auswerfstange 45 beispielsweise per Hand eingedrückt wird. Dabei fährt die Auswerfstange 45 mit ihrer Schräge 45a unter den Betätigungsarm 355 und schwenkt diesen im Uhrzeigersinn entgegen der Wirkung der Feder 356 hoch. Damit schwenken auch die Nasenteile 354 im Uhrzeigersinn aus einem Absenkweg 358 der Magnetbandkassette 200 heraus. Die Magnetbandkassette 200 fällt dann, wie es in Verbindung mit den anderen Ausführungsbeispielen beschrieben ist, mit ihrer Rückseite auf die untere Schenkelplatte 358b nieder bei gleichzeitigem Verschwenken des Kassettenschachtes 348 im Uhrzeigersinn. In Fig. 10 ist der Bewegungsvorgang des Stützblockes 351 verdeutlicht dargestellt. Die Auswerfstange 45 wird in Richtung eines Pfeiles 359 bewegt, und die Schräge 45a hebt den Betätigungsarm 355 an. Die Schräge 455a stellt die vordere Fläche eines Zahnes 360 dar, dessen hintere Schräge mit 45b bezeichnet ist. Beim Verschieben der Auswerfstange 45 in Richtung des Pfeiles 359 läuft der Betätigungsarm 355 auf die Spitze 45c des Zahnes 360 auf, wobei die Nasenteile 354 aus dem Absenkweg 358 heraus gezogen sind. Beim weiteren Verschieben läuft der Betätigungsarm 355 auf der Schräge 45b ab, und das Nasenteil 354 schwenkt wieder in den Innenraum 361 des Schachtes 348 hinein.

Wie Fig. 9 zeigt, ist die Magnetbandkassette 200, wie bei allen anderen Ausführungsformen, auf den unteren Kassettenschenkel 348b bzw. die Kassettenauflagen 331, 331a abgesenkt. Das Nasenteil 354, welches in der Lade- und Auswerfstellung die Unterseite 200b der Magnetbandkassette 200 mit einer Auflagefläche 362 abstützt, stößt nun mit einer Druckfläche 363 gegen die Rückseite 200c der Magnetbandkassette, und zwar unter der Wirkung der Feder 355. Durch diesen Andruck wird die Magnetbandkassette zusammen mit der von oben auf ihre Vorderseite 200d drückenden Liftfeder 346 gegenüber dem nicht dargestellten Magnetkopf genau positioniert.

Die Bewegungsabläufe von Kassettenschacht 348 und Kassetten 200 dieser zweiten Variante der zweiten Ausführungsform der Erfindung entsprechen denen der ersten Variante und im wesentlichen auch denen der ersten Ausführungsform. Es sind deshalb in den Fig. 8 und 9 nur die beiden Endstellungen, die Lade- und Auswerfstellung sowie die Spielstellung dargestellt.

## Patentansprüche

1. Magnetbandkassettengerät mit Wickeltellern für das Auf- und Abwickeln eines Magnetbandes und mit einem Lademechanismus mit Kassettenschacht (321, 348), der eingerichtet ist zum Anheben der Magnetbandkassette (200) in eine Auswerfstellung, in der das Einschieben und Auswerfen der Kassette (200) erfolgt, und zum Absenken der Magnetbandkassette (200) auf eine Kassettenauflage (331) in eine Spielstellung, in der die Wickelkerne (200e) auf Wickeldorne (330) aufgesetzt sind, wobei der Kassettenschacht (321, 348) aus einem im Schnitt U-förmigen Formteil (321, 348) mit zwei aufeinander zuweisenden Schenkelplatten (323, 324, 348a, 348b) und einer diese verbindenden Schachtseitenwand (328, 348c) besteht und wobei der Kassettenschacht (321, 348) derart um eine Schwenkachse (325) verschwenkbar ist, daß in der Auswerfstellung die eine Schenkelplatte (323, 348a) und in der Spielstellung die andere Schenkelplatte (324, 348b) in etwa parallel zur Kassettenauflage (231) verlaufen, dadurch gekenzeichnet, daß
- im Bereich der Schachtseitenwand (322, 348c) ein Stützsattel (327, 349a, 354) vorgesehen ist, auf dem die Kassette (200) in der Auswerfstellung aufliegt und aufliegend verschiebbar ist,
- der Stützsattel (327, 349a, 354) zum Absenken der Kassette (200) in die Spielstellung von der Kassette (200) weg bewegbar ist, um deren Rückwand (200c) zum Absenken freizugeben.

2. Magnetbandkassettengerät nach Anspruch 1, dadurch gekennzeichnet, daß der Stützsattel von einem in der Schachtseitenwand (322) vorgesehenen Sattelfalz (327) gebildet ist.

3. Magnetbandkassettengerät nach Anspruch 1, dadurch gekennzeichnet, daß der Stützsattel von einem gesondert wegschwenkbaren Aktionsteil (349a, 354) gebildet ist.

4. Magnetbandkassettengerät nach Anspruch 3, dadurch gekennzeichnet, daß das Aktionsteil ein wegschwenkbarer Stützschenkel (349a) einer Haltefeder (349) ist.

5. Magnetbandkassettengerät nach Anspruch 3, dadurch gekennzeichnet, daß das Aktionsteil von einem wegschwenkbaren Stützblock (351) gebildet ist.

6. Magnetbandkassettengerät nach Anspruch 1, dadurch gekennzeichnet, daß
- die Kassette (200) unter Federwirkung im Schacht (321, 348) so gesteuert wird, daß sie in Spielstellung auf die Kassettenauflage (331) gedrückt ist,
- die Kassette (200) beim Anheben unter der Federwirkung ein Drehmoment erfährt, wodurch sie in eine zur Spielstellung nicht parallelen Stellung gelangt, bis sich der Schacht (321, 348) in der Auswerfstellung befindet.

7. Magnetbandkassettengerät nach einem der Ansprüche 1 oder 6, dadurch gekennzeichnet, daß an einer der Schenkelplatten (323, 324, 348a, 348b) ein federndes Element (332, 346) angeordnet ist, welches in der Spielstellung der Kassette (200) diese in Richtung auf die Kassettenauflage (331) belastet und die Kassette (200) zu Beginn des Anhebevorganges im Schacht (321, 348) in die Auswerfposition dreht.

8. Magnetbandkassettengerät nach Anspruch 7, dadurch gekennzeichnet, daß das federnde Element (332, 346) eine an der oberen Schenkelplatte (323, 348a) angeordnete Blattfeder ist.

9. Magnetbandkassettengerät nach einem der Ansprüche 1 bis 8, dadurch gekennzeichnet, daß die untere Schenkelplatte (324, 348b), zu der die Kassette (200) in der Spielstellung parallel liegt, der Kassette (200) dann, wenn sie an ihr anliegt, einen Stützpunkt (z) bietet, der so gewählt ist, daß die Kraft der von oben gegen die Kassettenvorderseite drückenden Blattfeder (332, 346) um den Stützpunkt (z) ein Drehmoment auf die Kassette (200) liefert, das die Kassette (200) zum Stützsattel (327, 349a) hin belastet.

10. Magnetbandkassettengerät nach Anspruch 9, dadurch gekennzeichnet, daß der Stützpunkt (z) in der Spielstellung nicht an der Kassette (200) anliegt.

11. Magnetbandkassettengerät nach einem der Ansprüche 1 bis 3 und 7 bis 10, dadurch gekennzeichnet, daß die Drehachse (325) des Schachtes (321 so angeordnet ist, daß sich der Sattelfalz (327) beim Drehen des Kassettenschachtes (321) von der Kassette entfernt und sie zum Absenken freigibt.

12. Magnetbandkassettengerät nach einem der Ansprüche 1 bis 3 und 7 bis 11, dadurch gekennzeichnet, daß die Rückführbewegung der Kassette (200) auf den Sattelfalz (327) mittels einer Rückstellfeder (329) bewirkt wird, die gegen die Kassettenvorderseite wenigstens während der Schwenkbewegungen drückt.

13. Magnetbandkassettengerät nach Anspruch 12, dadurch gekennzeichnet, daß die Rückstellfeder (329) am Chassis (3) befestigt ist.

14. Magnetbandkassettengerät nach einem der Ansprüche 1 bis 4, dadurch gekennzeichnet, daß die Haltefeder (349b) des Aktionsteiles eine mit ihren Enden (349b₁, 349b₂) am Kassettenschacht (348) senkrecht zu dessen Drehachse (325) eingespannte Blattfeder ist, die mittels der Auswerfstange (45) des Kassettengerätes von der Kassette (200) derart weg bewegbar ist, daß der mit ihr verbundene Stützschenkel (349a) aus dem Absenkweg der Kassettenrückwand (200c) herausziehbar ist.

15. Magnetbandkassettengerät nach einem der Ansprüche 13 oder 14, dadurch gekennzeichnet, daß die Haltefeder (349) einen Betätigungsarm (349c) aufweist, der zum Durchbiegen der Haltefeder (349b) von der Auswerfstange (45) beaufschlagbar ist.

16. Magnetbandkassettengerät nach einem der Ansprüche 13 bis 15, dadurch gekennzeichnet, daß die Haltefeder (349b) mit einem Kassettenschenkel (349d) versehen ist, der bei in Spielstellung befindlicher Kassette (200) gegen die Kassettenrückwand drückt.

17. Magnetbandkassettengerät nach einem der Ansprüche 13 bis 16, dadurch gekennzeichnet, daß die Haltefeder (349b), der Stützschenkel (349a), der Kassettenschenkel (349d) und der Betätigungsarm (349c) ein einstückiges Formteil (349) aus einem federungsfähigen Material sind.

18. Magnetbandkassettengerät nach einem der Ansprüche 13 bis 17, dadurch gekennzeichnet, daß die als Blattfeder ausgebildete Haltefeder (349b) an einem ihrer Enden (349b₁) um eine zur Drehachse (325) des Schachtes (321) parallele Achse drehbar eingespannt ist, während das andere Ende (349b₂) in einer Tasche (348f) des Kassettenschachtes (348) gefangen ist.

19. Magnetbandkassettengerät nach einem der Ansprüche 1 bis 13, dadurch gekennzeichnet, daß der Stützblock (351) um eine zur Drehachse (325) des Schachtes (348) parallele Achse (349e) schwenkbar und mittels einer Feder (356) derart in Stützrichtung belastet ist, daß der Stützblock (351) in der Auswerfstellung unterhalb der Magnetbandkassette den Stützsattel bildet, wobei der Stützblock (351) mit einem Betätigungsarm (355) versehen ist, über den er mittels der Auswerfstange (45) zum Freigeben des Absenkweges (358) der Kassette (200) aus dem Innenraum (361) des Kassettenschachtes heraus schwenkbar ist.

20. Magnetbandkassettengerät nach einem der Ansprüche 1 bis 13 und 19, dadurch gekennzeichnet, daß der Stützblock unter der Belastung der Feder (356) in der Spielstellung gegen die Kassettenrückwand (200c) gedrückt ist.

21. Magnetbandkassettengerät nach einem der Ansprüche 5, 20 oder 21, dadurch gekennzeichnet, daß der Stützblock (351) aus Nasenteilen (354) besteht, die unter die Kassette (200) oder gegen die Kassettenrückwand (200c) fahren, und einem Träger (352) dieser Nasenteile (354), wobei die Nasenteile (354), der Träger (352) und der Betätigungsarm (355) als einstückiges Kunststoffspritzteil ausgebildet sind.

22. Magnetbandkassettengerät nach einem der Ansprüche 1 bis 21, dadurch gekennzeichnet, daß der Betätigungsarm (349c, 355) mit einer schrägen Stellfläche (45a) der Auswerfstange (45) zusammenwirkt, die in der Bewegungsrichtung der Auswerfstange (45) wirksam ist.

23. Magnetbandkassettengerät nach einem der Ansprüche 1 bis 22, dadurch gekennzeichnet, daß die Auswerfstange (45) zwei gegeneinander geneigte schräge Stellflächen (45a, 45b) aufweist, die zusammen einen Zahn (360) bilden, über den der Betätigungsarm (349c, 355) in beiden Bewegungsrichtungen der Auswerfstange (45) hinweg läuft, wobei er den Stützschenkel (349a) bzw. den Stützblock (351) gegen die Wirkung der Feder in den Zeiträumen, in denen der Absenkweg (361) freigegeben sein muß, aus dem Absenkweg heraus schwenkt.

24. Magnetbandkassettengerät nach einem der Ansprüche 1 bis 22, wobei das Laufwerk mit Fangstiften (341) versehen ist, auf die die Kassette (200) mit entsprechenden Durchbrüchen aufsetzt, dadurch gekennzeichnet, daß die in die Kassettendurchbrüche einfahrenden Fangstifte (341) so gestaltet sind, daß sie die Kassette (200) während der Absenkbewegung nach vorn ziehen in die korrekte Spielposition.

## Claims

1. A magnetic-tape-cassette apparatus comprising reel discs for winding and unwinding a magnetic tape and a loading mechanism with a cassette holder (321, 348) which is adapted to raise the magnetic-tape cassette (200) into an ejection position, in which the cassette (200) is inserted and ejected, and to lower the magnetic-tape cassette (200) onto a cassette support (331) in a play position, in which the reel hubs (200e) are engaged by winding spindles (330), the cassette holder (321, 348) comprising a cross-sectionally U-shaped part (321, 348) with two facing holder plates (323, 324, 348a, 348b) and a transverse holder wall (328, 348c) interconnecting said plates, the cassette holder (321, 348) being pivotable about a spindle (325) in such a manner that in the ejection position one holder plate (323, 348a) and in the play position the other holder plate (324, 348b) extend substantially parallel to the cassette support (231), characterised in that
- in the area of the transverse holder wall (322, 348c) there is provided a supporting ridge (327, 349a, 354), on which the cassette (200) is supported in the ejection position and is movable while being supported,
- to lower the cassette (200) into the play position the supporting ridge (327, 349a, 354) is movable away from the cassette (200) to allow the rear wall (200c) of the cassette to be lowered.

2. A magnetic-tape-cassette apparatus as claimed in Claim 1, characterised in that the supporting ridge is formed by a supporting fold (327) provided in the transverse holder wall (322).

3. A magnetic-tape-cassette apparatus as claimed in Claim 1, characterised in thatthe supporting ridge is formed by an active part (349a, 354) which can be pivoted away separately.

4. A magnetic-tape-cassette apparatus as claimed in Claim 3, characterised in that the active part is a supporting limb (349a) of a retaining spring (349), which limb can be pivoted away.

5. A magnetic-tape-cassette apparatus as claimed in Claim 3, characterised in that the active part is formed by a supporting block (351) which can be pivoted away.

6. A magnetic-tape-cassette apparatus as claimed in Claim 1, characterised in that
- in the holder (321, 348) the cassette (200) is controlled by spring action in such a manner that it is pressed onto the cassette support (331) in the play position,
- the cassette (200) experiences a torque under the influence of the spring action during lifting, as a result of which it assumes a position which is not parallel to the play position, until the holder (321, 348) is in the ejection position.

7. A magnetic-tape-cassette apparatus as claimed in Claim 1 or 6, characterised in that a resilient element (332, 346) is arranged on one of the holder plates (323, 324, 348a, 348b), which element urges said cassette towards the cassette support (331) in the play position of the cassette (200) and pivots the cassette (200) into the ejection position in the holder (321, 348) at the beginning of the lifting operation.

8. A magnetic-tape-cassette apparatus as claimed in Claim 7, characterised in that the resilient element (332, 346) is a blade spring arranged on the upper holder plate (323, 348a).

9. A magnetic-tape-cassette apparatus as claimed in any one of the Claims 1 to 8, characterised in that the lower holder plate (324, 348b), to which the cassette (200) extends parallel in the play position, when it supports the cassette (200), provides a cassette-supporting point (z) selected in such a manner that the force exerted on the cassette front from above by the blade spring (332, 346) produces a torque about the supporting point (z) on the cassette (200), which torque urges the cassette (200) towards the supporting ridge (327, 349a).

10. A magnetic-tape-cassette apparatus as claimed in Claim 9, characterised in that in the play position the supporting point (z) is not situated on the cassette (200).

11. A magnetic-tape-cassette apparatus as claimed in any one of the Claims 1 to 3 or 7 to 10, characterised in that the spindle (325) of the holder (321) is arranged in such a way that when the cassette holder (321) is pivoted the supporting fold (327) is moved away from the cassette and enables it to be lowered.

12. A magnetic-tape-cassette apparatus as claimed in any one of the Claims 1 to 3 or 7 to 11, characterised in that the return movement of the cassette (200) to the supporting fold (327) is obtained by means of a return spring (329) which acts against the cassette front at least during the pivotal movements.

13. A magnetic-tape-cassette apparatus as claimed in Claim 12, characterised in that the return spring (329) is secured to the chassis (3).

14. A magnetic-tape-cassette apparatus as claimed in any one of the Claims 1 to 4, characterised in that the retaining spring (349b) of the active part is a blade spring which has its ends (349b₁, 349b₂) attached to the cassette holder (348) perpendicularly to the spindle (325) of said holder and which can be moved away from the cassette (200) by means of the ejection rod (45) of the cassette apparatus in such a manner that the supporting limb (349a) connected to said spring can be withdrawn from the lowering path of the rear wall (200c) of the cassette.

15. A magnetic-tape-cassette apparatus as claimed in Claim 13 or 14, characterised in that the retaining spring (349) has an actuating arm (349c) which can be actuated by the ejection rod (45) to deflect the retaining spring (349b).

16. A magnetic-tape-cassette apparatus as claimed in any one of the Claims 13 to 15, characterised in that the retaining spring (349b) comprises a cassette limb (349d) which acts against the rear cassette wall when the cassette (200) is in the play position.

17. A magnetic-tape-cassette apparatus as claimed in any one of the Claims 13 to 16, characterised in that the retaining spring (349b), the supporting limb (349a), the cassette limb (349d) and the actuating arm (349c) form a one-piece part (349) of a resilient material.

18. A magnetic-tape-cassette apparatus as claimed in any one of the Claims 13 to 17, characterised in that the retaining spring (349b), which is constructed as a blade spring, has one (349b₁) of its ends attached for pivotal movement about an axis parallel to the spindle (325) of the holder (321), the other end (349b₂) being retained in a pocket (348f) of the cassette holder (348).

19. A magnetic-tape-cassette apparatus as claimed in any one of the Claims 1 to 13, characterised in that the supporting block (351) is pivotable about an axis (349e) parallel to the spindle (325) of the holder (348) and is urged in the supporting direction by means of a spring (356) in such a manner that the supporting block (351) forms the supporting ridge in the ejection position underneath the magnetic-tape cassette, the supporting block (351) comprising an actuating arm (355) *via* which, by means of the ejection rod (45), it can be pivoted out of the interior (361) of the cassette holder to clear the lowering path (358) for the cassette (200).

20. A magnetic-tape-cassette apparatus as claimed in any one of the Claims 1 to 13 and 19, characterised in that in the play position the supporting block is urged against the rear wall (200c) of the cassette under the influence of the spring (356).

21. A magnetic-tape-cassette apparatus as claimed in Claim 5, 20 or 21, characterised in that the supporting block (351) comprises nose portions (354), which move underneath the cassette (200) or against the rear cassette wall (200c), and a carrier (352) for said nose portions (354), the nose portions (354), the carrier (352) and the actuating arm (355) being constructed as a one-piece injection-moulded plastics part.

22. A magnetic-tape-cassette apparatus as claimed in any one of the Claims 1 to 21, characterised in that the actuating arm (349c, 355) cooperates with an inclined actuating surface (45a) of the ejection rod (45), which acts in the direction of movement of the ejection rod (45).

23. A magnetic-tape-cassette apparatus as claimed in any one of the Claims 1 to 22, characterized in that the ejection rod (45) has two oppositely inclined actuating surfaces (45a, 45b), which surfaces together form a tooth (360) *via* which the actuating arm (349c, 355) travels in both directions of movement of the ejection rod (45), said tooth pivoting the supporting limb (349a) or the supporting block (351) out of the lowering path against the action of the spring in those time intervals in which the lowering path (361) should be cleared.

24. A magnetic-tape-cassette apparatus as claimed in any one of the Claims 1 to 22, in which the deck comprises locating pins (341) which are engageable in corresponding openings in the cassette (200), characterised in that the locating pins (341) which are engageable in the cassette openings are constructed so as to pull the cassette (200) forward into the correct play position during the lowering movement.

## Revendications

1. Appareil à cassette de bande magnétique comprenant des plateaux de bobinage pour bobiner et débobiner une bande magnétique et un mécanisme de chargement comportant un compartiment à cassette (321, 348) qui est agencé pour élever la cassette de bande magnétique (200) vers une position d'éjection, dans laquelle l'introduction et l'éjection de la cassette (200) ont lieu, et pour abaisser la cassette de bande magnétique (200) sur un support de cassette (331) vers une position de lecture, dans laquelle les noyaux de bobines (200e) sont placés sur des mandrins de bobinage (330), le compartiment à cassette (321, 348) comprenant une pièce de section en U (321, 348) avec deux plaques d'ailes qui se font face (323, 324, 348a, 348b) et une paroi latérale du compartiment qui les relie (322, 348c) et le compartiment à cassette (321, 348) pouvant pivoter autour d'un pivot (325), de sorte que, dans la position d'éjection, la première plaque d'aile (323, 348a) et, dans la position de lecture, l'autre plaque d'aile (324, 348b) sont sensiblement parallèles au support de cassette (231), caractérisé en ce que
- dans la zone de la paroi latérale du compartiment (322, 348c), un appui (327, 349a, 354) est prévu, sur lequel la cassette (200) s'appuie en position d'éjection et sur lequel la cassette soutenue peut glisser,
- l'appui (327, 349a, 354), afin de faire descendre la cassette (200) en position de lecture, peut être écarté de la cassette (200) pour libérer la face arrière (200c) de celle-ci pour la descente.

2. Appareil à cassette de bande magnétique suivant la revendication 1, caractérisé en ce que l'appui est formé d'un ressaut (327) prévu dans la paroi latérale du compartiment (322).

3. Appareil à cassette de bande magnétique suivant la revendication 1, caractérisé en ce que l'appui est formé d'une pièce active (349a, 354) séparée qui peut être écartée par pivotement.

4. Appareil à cassette de bande magnétique suivant la revendication 3, caractérisé en ce que la pièce active est une branche-support (349a) d'un ressort de retenue (349) qui peut être écartée par pivotement.

5. Appareil à cassette de bande magnétique suivant la revendication 3, caractérisé en ce que la pièce active est formée d'un bloc-support (351) qui peut être écarté par pivotement.

6. Appareil à cassette de bande magnétique suivant la revendication 1, caractérisé en ce que
- la cassette (200) est pilotée sous la sollicitation d'un ressort dans le compartiment (321, 348), de telle sorte qu'elle soit pressée en position de lecture sur le support de cassette (331),
- la cassette (200), lorsqu'elle est élevée sous la sollicitation d'un ressort, est soumise à un couple de rotation, par lequel elle atteint une position non parallèle à la position de lecture, jusqu'à ce que le compartiment (321, 348) soit en position d'éjection.

7. Appareil à cassette de bande magnétique suivant l'une des revendications 1 ou 6, caractérisé en ce que sur une des plaques d'aile (323, 324, 348a, 348b), est disposé un élément à effet de ressort (332, 346) qui, dans la position de lecture de la cassette (200), presse celle-ci en direction du support de cassette (331) et fait pivoter la cassette (200) au début du processus d'élévation dans le compartiment (321, 348) vers la position d'éjection.

8. Appareil à cassette de bande magnétique suivant la revendication 7, caractérisé en ce que l'élément à effet de ressort (332, 346) est un ressort à lame disposé sur la plaque d'aile supérieure (323, 348a).

9. Appareil à cassette de bande magnétique suivant l'une quelconque des revendications 1 à 8, caractérisé en ce que la plaque d'aile inférieure (324, 348b), parallèle à la cassette (200) en position de lecture, offre à la cassette (200), lorsque celle-ci est posée dessus, un point d'appui (z), qui est choisi tel que la force du ressort à lame (332, 346), qui s'exerce du haut contre la face avant de la cassette, fournit au point d'appui (z) sur la cassette (200) un couple de rotation qui sollicite la cassette (200) vers le ressaut (327, 349a).

10. Appareil à cassette de bande magnétique suivant la revendication 9, caractérisé en ce que le point d'appui (z), dans la position de lecture n'est pas en contact pas avec la cassette (200).

11. Appareil à cassette de bande magnétique suivant l'une quelconque des revendications 1 à 3 et 7 à 10, caractérisé en ce que l'axe de pivotement (325) du compartiment (321) est disposé de telle sorte que le ressaut (327) s'écarte de la cassette lors du pivotement du compartiment à cassette (321) et la libère afin qu'elle descende.

12. Appareil à cassette de bande magnétique suivant l'une quelconque des revendications 1 à 3 et 7 à 11, caractérisé en ce que le mouvement de retour de la cassette (200) sur le ressaut (327) est causé par un ressort de rappel (329), qui exerce une pression contre la face avant de la cassette, du moins lors des mouvements de pivotement.

13. Appareil à cassette de bande magnétique suivant la revendication 12, caractérisé en ce que le ressort de rappel (329) est fixé au châssis (3).

14. Appareil à cassette de bande magnétique suivant l'une quelconque des revendications 1 à 4, caractérisé en ce que le ressort de retenue (349b) de la pièce active est un ressort à lame mis sous contrainte par ses extrémités (349b₁, 349b₂) sur le compartiment à cassette (348) perpendiculairement à l'axe de pivotement (325) de celui-ci, qui peut être écarté de la cassette (200) au moyen de la barre d'éjection (45) de l'appareil à cassette, de sorte que la branche-support (349a) qui y est reliée, elle peut être retirée du chemin de descente de la paroi arrière de la cassette (200c).

15. Appareil à cassette de bande magnétique suivant la revendication 13 ou 14, caractérisé en ce que le ressort de retenue (349) comporte un bras d'actionnement (349c), qui peut être sollicité par la barre d'éjection (45) pour faire fléchir le ressort de retenue (349b)

16. Appareil à cassette de bande magnétique suivant l'une quelconque des revendications 13 à 15, caractérisé en ce que le ressort de retenue (349b) est pourvu d'une branche de cassette (349d), qui exerce une pression sur la paroi arrière de la cassette (200) se trouvant en position de lecture.

17. Appareil à cassette de bande magnétique suivant l'une quelconque des revendications 13 à 16, caractérisé en ce que le ressort de retenue (349b), la branche-support (349a), la branche de cassette (349d) et le bras d'actionnement (349c) constituent une pièce (349) d'un seul tenant faite dans une matière à effet de ressort.

18. Appareil à cassette de bande magnétique suivant l'une quelconque des revendications 13 à 17, caractérisé en ce que le ressort de retenue (349b) ayant la forme d'un ressort à lame, est mis sous contrainte à une de ses extrémités (349b₁), de manière à pouvoir pivoter autour d'un axe parallèle à l'axe de pivotement (325) du compartiment (321), alors que son autre extrémité (349b₂) est reçue dans une cavité (348f) du compartiment à cassette (348).

19. Appareil à cassette de bande magnétique suivant l'une des revendications 1 à 13, caractérisé en ce que le bloc support (351) peut pivoter autour d'un axe (349e) parallèle à l'axe de pivotement (325) du compartiment (348) et est sollicité au moyen d'un ressort (356) dans la direction d'appui, de sorte que le bloc-support (351) constitue l'appui en position d'éjection sous la cassette de bande magnétique, le bloc-support (351) étant pourvu d'un bras d'actionnement (355), par l'intermédiaire duquel il peut être écarté par pivotement de l'espace intérieur (361) du compartiment à cassette au moyen de la barre d'éjection (45) afin de libérer le chemin de descente (358) de la cassette (200).

20. Appareil à cassette de bande magnétique suivant l'une quelconque des revendications 1 à 13 et 19, caractérisé en ce que le bloc-support est pressé contre la paroi arrière (200c) de la cassette en position de lecture sous la sollicitation du ressort (356).

21. Appareil à cassette de bande magnétique suivant l'une quelconque des revendications 5, 20 ou 21, caractérisé en ce que le bloc-support (351) comprend des talons (354), qui s'engagent sous la cassette (200) ou contre la paroi arrière de la cassette (200c), et un support (352) pour ces talons (354), les talons (354), le support (352) et le bras d'actionnement (355) constituant une pièce d'un seul tenant moulée par injection en matière plastique.

22. Appareil à cassette de bande magnétique suivant l'une quelconque des revendications 1 à 21, caractérisé en ce que le bras d'actionnement (349c, 355) agit de concert avec un plan incliné de positionnement (45a) de la barre d'éjection (45), qui est actif dans la direction de déplacement de la barre d'éjection (45).

23. Appareil à cassette de bande magnétique suivant l'une quelconque des revendications 1 à 22, caractérisé en ce que la barre d'éjection (45) présente deux plans inclinés de positionnement (45a, 45b) inclinés l'un vers l'autre, qui forment ensemble une dent (360), par-dessus laquelle le bras d'actionnement (349c, 355) passe dans les deux directions de déplacement de la barre d'éjection (45), étant entendu qu'elle écarte du chemin de descente la branche-support (349a) ou le bloc-support (351) à l'encontre de la force du ressort durant les laps de temps, où le chemin de descente (361) doit être libéré.

24. Appareil à cassette de bande magnétique suivant l'une quelconque des revendications 1 à 22, dans lequel le mécanisme d'entraînement est pourvu de guides de positionnement (341), sur lesquels la cassette (200) se place grâce à des ouvertures correspondantes, caractérisé en ce que, les guides de positionnement (341) engagés dans les ouvertures de la cassette sont façonnés, de sorte qu'ils tirent la cassette (200) vers l'avant vers la position de lecture correcte pendant le mouvement de descente.
